# EUROPEAN PATENT APPLICATION

(11) **EP 4 465 502 A1**
(43) Date of publication of application: **20.11.2024**
(21) Application number: 24151505.5
(22) Date of filing: 12.01.2024
(51) Int. Cl.: H02K 15/00

(54) **EXPANDING AND TWISTING MECHANISM AND APPARATUS FOR PROCESSING AND PRODUCING FLAT WIRE MOTOR STATOR**

(30) Priority: 15.05.2023 CN 202310542568
(71) Applicant: UPTEC Intelligent Manufacturing (Wuxi) Co., Ltd., Wuxi City, Jiangsu Province 214000 (CN)
(72) Inventor: Ye, Xin, 214000 Wuxi City, Jiangsu Province (CN); Zhou, Liangliang, 214000 Wuxi City, Jiangsu Province (CN); Xu, Jianhai, 214000 Wuxi City, Jiangsu Province (CN); Tang, Shang, 214000 Wuxi City, Jiangsu Province (CN); Xu, Lei, 214000 Wuxi City, Jiangsu Province (CN)
(74) Representative: Longoni, Alessandra

(57) **Abstract**

The present invention discloses an expanding and twisting mechanism for and an apparatus for processing and producing a flat wire motor stator. The expanding and twisting mechanism includes: a movement protection mechanism, configured to protect and transport a stator during production; an expanding and twisting assembly, configured to expand, separate, and twist a flat wire of a stator transported by the movement protection mechanism; a driving mechanism, configured to assist the expanding and twisting assembly in completing stator processing, and configured to provide power for movement of a component in the expanding and twisting assembly; and a lower support base, configured to mount the expanding and twisting assembly, to implement processing of the flat wire motor stator fully automatically, and help separate and twist flat wires of a stator by using a simple structure and brief steps, helping increase processing efficiency of the stator.

## Description

### FIELD OF TECHNOLOGY

The present invention belongs to the field of expanding and twisting technologies for processing and producing a stator, and relates to an expanding and twisting mechanism for and an apparatus for processing and producing a flat wire motor stator.

### BACKGROUND

As the country vigorously promotes energy conservation and environmental protection, new energy vehicles are developing rapidly. A driving motor, as a core component of the new energy vehicle, plays a vital role. When the driving motor is assembled, layered twisting needs to be performed on a stator of the driving motor. Because a quantity of flat wire layers (eight layers at present) required by the stator of the driving motor for the new energy vehicle is increasingly increased, a mold notch corresponding to the stator flat wire also increases exponentially. However, failure of twisting is caused when a single wire cannot be inserted into a mold, and a relatively large quantity of flat wire layers of the stator increases a difficulty for twisting. Therefore, it can be ensured that the wire is inserted accurately during production. Chinese Patent Application No. 202010766711.5 discloses an apparatus and a method for twisting an end of a flat wire motor stator. The apparatus includes: a fixture positioning mechanism, configured to position and transport a stator; an expanding mechanism, configured to move an end of a stator coil along a radial direction of a stator core; a twisting mechanism, configured to twist an expanded wire; and a base, configured to mount a twisting mechanism and an expanding mechanism. The known invention further provides a method for twisting an end of a flat wire motor stator, including the following steps: positioning, first twisting, and second twisting; and a method for performing layered expansion on an end of a flat wire motor stator, including the following steps: positioning, first expanding, second expanding, and the like. The expanding mechanism is disposed, and a contact surface between an expanding component and the flat wire is small, which ensures that each wire can be inserted into a twisting mold, ensures accuracy of wire inserting and increases a qualification rate of twisting, and implements full automatic expansion. This saves manpower, increases expansion efficiency, ensures the accuracy of wire inserting, and increases the qualification rate of twisting. However, the apparatus is twisted and expanded separately by using the expanding mechanism and the twisting mechanism, which results in a complicated structure of the apparatus and complicated operation steps. Therefore, it is necessary to design an expanding and twisting mechanism for and an apparatus for processing and producing a flat wire motor stator to resolve the foregoing problem.

### SUMMARY

To resolve the foregoing problem and overcome shortcomings in the conventional technologies, the present invention provides an expanding and twisting mechanism for and an apparatus for processing and producing a flat wire motor stator. The present invention is intended to: implement processing of the flat wire motor stator fully automatically, and help separate and twist flat wires of a stator by using a simple structure and brief steps, helping increase processing efficiency of the stator.

To achieve the foregoing purpose, the technical solutions used in the present invention are as follows: an expanding and twisting mechanism for processing and producing a flat wire motor stator, including:
a movement protection mechanism, configured to protect and transport a stator during production;
an expanding and twisting assembly, configured to expand, separate, and twist a flat wire of a stator transported by the movement protection mechanism;
a driving mechanism, configured to assist the expanding and twisting assembly in completing stator processing, and configured to provide power for movement of a component in the expanding and twisting assembly; and
a lower support base, configured to mount the expanding and twisting assembly.

Preferably, the movement protection mechanism includes an upper gear protection tooling, a lower gear protection tooling, a first power source, a second power source, and a ninety-degree angle converter. The second power source is firmly mounted on an upper surface of a frame body. An output end of the second power source extends to a lower surface of the frame body and is firmly connected to the upper gear protection tooling. The first power source is firmly mounted on the upper surface of the frame body. The ninety-degree angle converter is firmly mounted on the upper surface of the frame body. An output end of the first power source is connected to the ninety-degree angle converter. A screw rod is firmly mounted on an output end of the ninety-degree angle converter. The lower gear protection tooling meshes with the screw rod, and the lower gear protection tooling is slidably mounted on the frame body through a sliding rod. For the lower gear protection tooling, through cooperation of the ninety-degree angle converter, the screw rod, and the sliding rod, a structure for adjusting a height of the lower gear protection tooling is formed.

Preferably, the expanding and twisting assembly includes a first expanding and mounting disk, a first expanding head, a first expanding and rotating disk, a first cam follower, a second expanding and mounting disk, a second expanding head, a second expanding and rotating disk, and a second cam follower. The second expanding and mounting disk is movably mounted on the lower support base through a disk base. The disk base is firmly mounted on the lower support base, the second expanding and mounting disk is rotatably mounted on the disk base, and the second expanding and rotating disk is rotatably mounted in the second expanding and mounting disk. The first expanding and mounting disk is rotatably mounted on the second expanding and mounting disk, the first expanding and rotating disk is rotatably mounted within the first expanding and mounting disk, multiple first expanding heads are slidably connected between the first expanding and mounting disk and the first expanding and rotating disk. Multiple second expanding heads are slidably connected between the second expanding and mounting disk and the second expanding and rotating disk. The first cam follower is rotatably connected to the first expanding head, and the second cam follower is rotatably connected to the second expanding head. Preferably, the driving mechanism includes a first cylinder, a second cylinder, a third cylinder, and a fourth cylinder. The second cylinder is rotatably mounted on a side wall of the first expanding and mounting disk, and the fourth cylinder is rotatably mounted on a side wall of the second expanding and mounting disk. An output end of the second cylinder is connected to the first expanding and rotating disk, and an output end of the fourth cylinder is connected to the second expanding and rotating disk. The first cylinder and the third cylinder are both rotatably mounted on a side edge of the expanding and twisting assembly. The first cylinder and the third cylinder are respectively configured to drive the first expanding and mounting disk and the second expanding and mounting disk to rotate.

Preferably, swing blocks are respectively firmly mounted on the first expanding and rotating disk and the second expanding and rotating disk. The output end of the second cylinder and the output end of the fourth cylinder are respectively rotatably connected to the swing block on the first expanding and rotating disk and the swing block on the second expanding and rotating disk. Mounting blocks are respectively firmly mounted on the side wall of the first expanding and mounting disk and the side wall of the second expanding and mounting disk. An output end of the first cylinder and an output end of the third cylinder are respectively rotatably connected to the mounting block on the first expanding and mounting disk and the mounting block on the second expanding and mounting disk.

Optionally, an alignment block is firmly mounted on the disk base. The alignment block is mounted at an upper center position of the disk base, and convex teeth are fastened to the alignment block.

An apparatus for processing and producing a flat wire motor stator is provided, including a base, a power distribution cabinet, and the expanding and twisting mechanism. The power distribution cabinet is mounted on the base, a material feeding mechanism is mounted on the base, a frame body is mounted on the base, and a material transfer mechanism is mounted on the frame body. Through cooperation of the material feeding mechanism and the material transfer mechanism, a structure for rapid loading and unloading of the stator is formed, and multiple expanding and twisting mechanisms are mounted on the base.

Preferably, the material feeding mechanism includes a wire body. The wire body is firmly mounted on the base. Multiple evenly distributed stator bases are firmly mounted on the wire body, and multiple lifting cylinders located directly below the corresponding stator bases are firmly mounted on the wire body.

Preferably, the material transfer mechanism includes a third power source, a servo motor, a clamping jaw cylinder, a first linear module, and a second linear module. The first linear module is mounted on the frame body, and two ends of the second linear module are respectively mounted on the frame body and the first linear module. The third power source is mounted on the second linear module, the servo motor is mounted on the third power source, and two clamping jaw cylinders are firmly mounted on an output end of the servo motor.

Compared with the conventional technologies, the present invention has the following beneficial effects.

According to the present invention, copper wires on the stator are expanded and directly twisted by using the separating and twisting mechanism in brief operating steps, so that production can be completed rapidly and efficiently, a production rate of the stator is increased, and production efficiency is increased.

### BRIEF DESCRIPTION OF THE DRAWINGS

FIG. 1 is a schematic three-dimensional diagram of a structure of the present invention;
FIG. 2 is a schematic three-dimensional diagram of a structure of a separating and twisting mechanism of the present invention;
FIG. 3 is a schematic three-dimensional diagram of a structure of a material transfer mechanism of the present invention;
FIG. 4 is a schematic three-dimensional diagram of a structure of a separating and twisting part of the present invention; and
FIG. 5 is a schematic exploded view of a partial structure of a separating and twisting part of the present invention;
FIG. 6 is a schematic three-dimensional diagram of a partial structure of a separating and twisting assembly of the present invention;
FIG. 7 is a schematic diagram of a state of a stator end of the present invention before separation and twisting; and
FIG. 8 is a schematic diagram of a state of a stator end of the present invention after separation and twisting.

Reference numerals: 1-base, 2-power distribution cabinet, 3-frame body, 4-wire body, 5-stator base, 6-lifting cylinder, 7-third power source, 8-servo motor, 9-clamping jaw cylinder, 10-first linear module, 11-second linear module, 12-upper gear protection tooling, 13-lower gear protection tooling, 14-first power source, 15-second power source, 16-ninety-degree angle converter, 17-screw rod, 18-sliding rod, 19-lower support base, 20-first cylinder, 21-second cylinder, 22-third cylinder, 23-fourth cylinder, 24-First expanding and mounting disk, 25-first expanding head, 26-first expanding and rotating disk, 27-first cam follower, 28-second expanding and mounting disk, 29-second expanding head, 30-second expanding and rotating disk, 31-second cam follower, 32-disk base, 33-swing block, 34-mounting block, 35-alignment block, 36-convex teeth.

### DESCRIPTION OF THE EMBODIMENTS

The following clearly and completely describes technical solutions in embodiments of the present invention with reference to accompanying drawings. Apparently, the described embodiments are merely some but not all of the embodiments of the present invention. Based on the embodiments of the present invention, all other embodiments obtained by those of ordinary skill in the art without creative effort fall within the protection scope of the present invention as claimed.

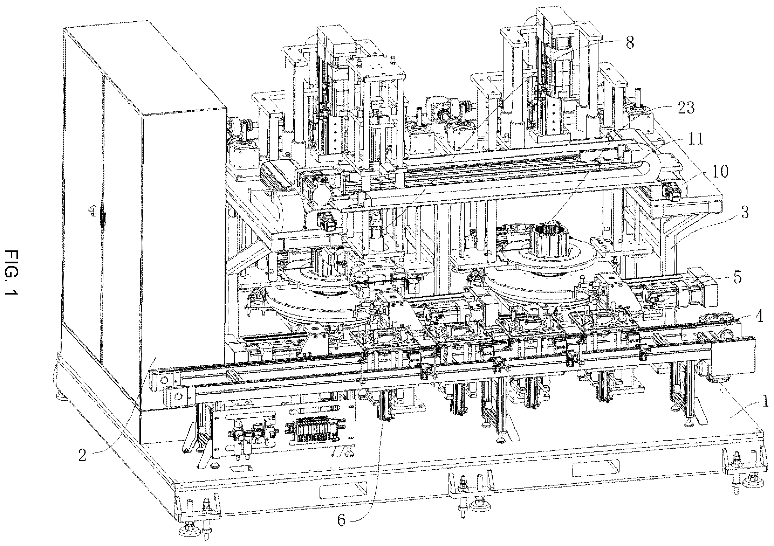

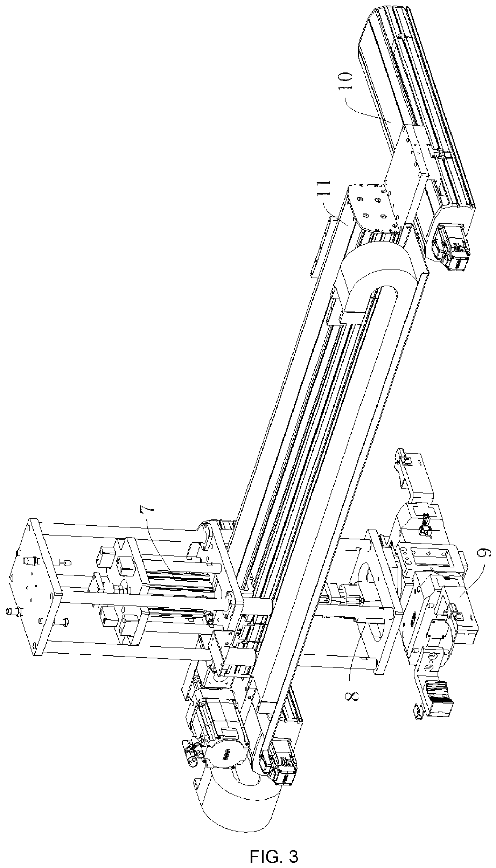

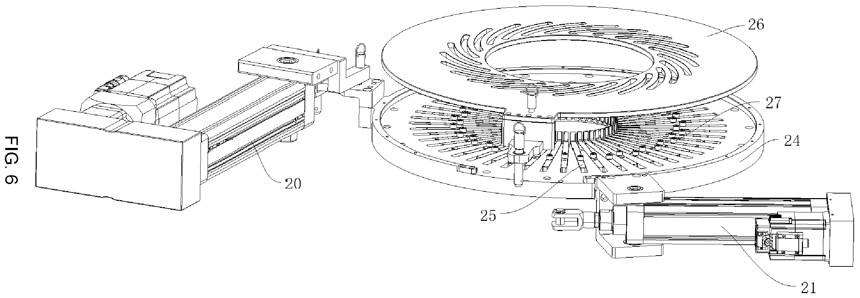

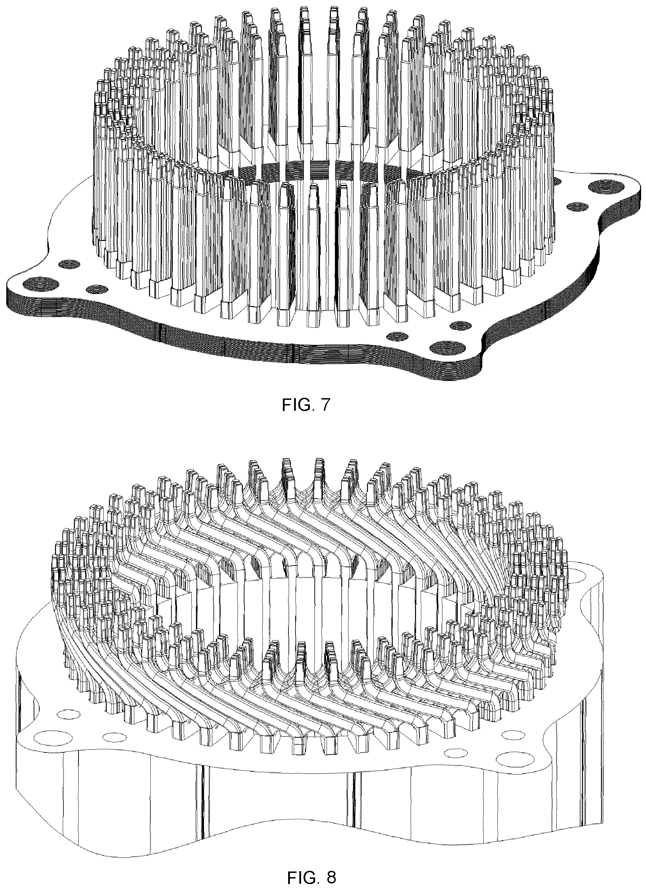

The following describes specific implementation of the present invention in detail with reference to FIG. 1 to FIG. 8.

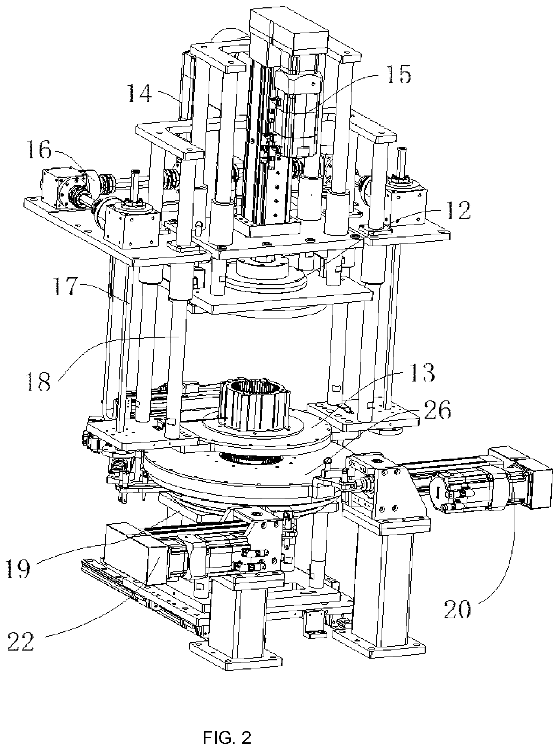

The present invention provides an expanding and twisting mechanism for processing and producing a flat wire motor stator as shown in FIG. 2, including:
a movement protection mechanism, configured to protect and transport a stator during production;
an expanding and twisting assembly, configured to expand, separate, and twist a flat wire of a stator transported by the movement protection mechanism;
a driving mechanism, configured to assist the expanding and twisting assembly in completing stator processing, and configured to provide power for movement of a component in the expanding and twisting assembly; and
a lower support base 19, configured to mount the expanding and twisting assembly. The flat wire is separated and twisted efficiently and rapidly by using the expanding and twisting mechanism, which has a simple structure.

In this embodiment, as shown in FIG. 2, the movement protection mechanism includes an upper gear protection tooling 12, a lower gear protection tooling 13, a first power source 14, a second power source 15, and a ninety-degree angle converter 16. The second power source 15 is firmly mounted on an upper surface of a frame body 3. An output end of the second power source 15 extends to a lower surface of the frame body 3 and is firmly connected to the upper gear protection tooling 12. The first power source 14 is firmly mounted on the upper surface of the frame body 3. The ninety-degree angle converter 16 is firmly mounted on the upper surface of the frame body 3. An output end of the first power source 14 is connected to the ninety-degree angle converter 16. A screw rod 17 is firmly mounted on an output end of the ninety-degree angle converter 16. The lower gear protection tooling 13 meshes with the screw rod 17. The lower gear protection tooling 13 is slidably mounted on the frame body 3 through a sliding rod 18. The sliding rod 18 is configured to prevent the lower gear protection tooling 13 from rotating with the screw rod 17. Through cooperation of the ninety-degree angle converter 16, the screw rod 17, and the sliding rod 18, a structure for adjusting a height of the lower gear protection tooling 13 is formed. The upper gear protection tooling 12 and the lower gear protection tooling 13 are used as a set, to fasten and protect the stator and protect copper wires at both ends of the stator, and avoid damage to the copper wires at both ends of the stator. The first power source 14 operates to drive the ninety-degree angle converter 16. The ninety-degree angle converter 16 drives the screw rod 17 to rotate. The rotation of the screw rod 17 drives the lower gear protection tooling 13 to move. The lower gear protection tooling 13 is controlled by the first power source 14 to move downward, so that the upper gear protection tooling 12 is separated and spaced apart from the lower gear protection tooling 13. In this case, a stator may be placed on the lower gear protection tooling 13, and then the upper gear protection tooling 12 is driven, by using the second power source 15, to be close to the stator, so that the upper gear protection tooling 12 is sleeved on the other end of the stator and fastened. Therefore, the stator is fastened and protected by using the upper gear protection tooling 12 and the lower gear protection tooling 13. When it is necessary to complete processing of the stator, the first power source 14, the ninety-degree angle converter 16, the screw rod 17, and the sliding rod 18 cooperate with each other and operate, so that the lower gear protection tooling 13 moves downward, and the upper gear protection tooling 12 moves downward under the action of the second power source 15, and finally the stator is placed on the expanding and twisting assembly.

In this embodiment, as shown in FIG. 2 and FIG. 4 to FIG. 6, the expanding and twisting assembly includes a first expanding and mounting disk 24, a first expanding head 25, a first expanding and rotating disk 26, a first cam follower 27, a second expanding and mounting disk 28, a second expanding head 29, a second expanding and rotating disk 30, and a second cam follower 31. The second expanding and mounting disk 28 is movably mounted on the lower support base 19 through a disk base 32. The disk base 32 is firmly mounted on the lower support base 19, the second expanding and mounting disk 28 is rotatably mounted on the disk base 32, and the second expanding and rotating disk 30 is rotatably mounted in the second expanding and mounting disk 28. The first expanding and mounting disk 24 is rotatably mounted on the second expanding and mounting disk 28. The first expanding and rotating disk 26 is rotatably mounted within the first expanding and mounting disk 24. Multiple first expanding heads 25 are slidably connected between the first expanding and mounting disk 24 and the first expanding and rotating disk 26. Multiple second expanding heads 29 are slidably connected between the second expanding and mounting disk 28 and the second expanding and rotating disk 30. The first cam follower 27 is rotatably connected to the first expanding head 25, and the second cam follower 31 is rotatably connected to the second expanding head 29. Both the first expanding and rotating disk and the second expanding and rotating disk are provided with multiple uniformly circumferentially arranged arc-shaped grooves. The first expanding and mounting disk 24 and the second expanding and mounting disk 28 are both provided with multiple uniformly circumferentially arranged straight grooves. The first expanding head 25 is slidably connected within the straight groove of the first expanding and mounting disk 24, and the second expanding head 29 is mounted within the straight groove of the second expanding and mounting disk 28. The first cam follower 27 slides within the arc-shaped groove on the first expanding and rotating disk 26, and the second cam follower 31 slides within the arc-shaped groove on the second expanding and rotating disk 30.

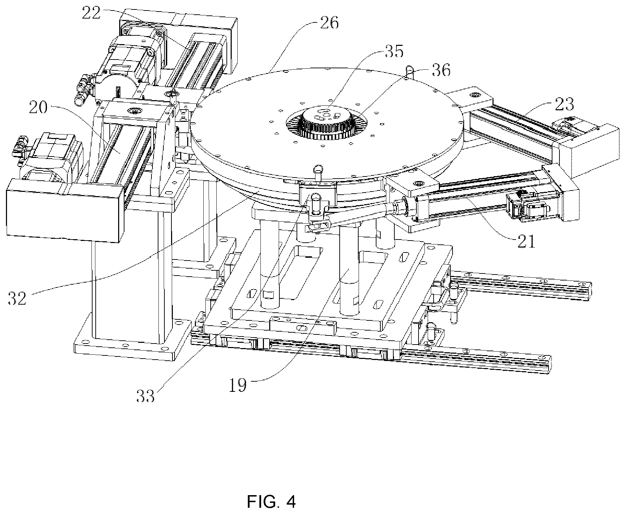

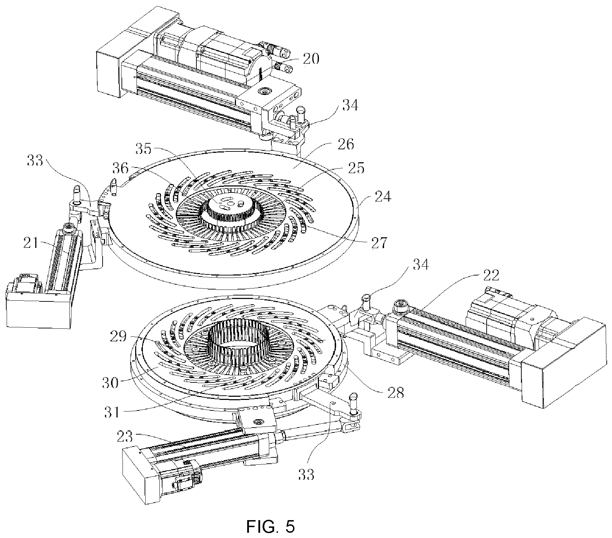

In this embodiment, as shown in FIG. 4 and FIG. 5, the driving mechanism includes a first cylinder 20, a second cylinder 21, a third cylinder 22, and a fourth cylinder 23. The second cylinder 21 is rotatably mounted on a side wall of the first expanding and mounting disk 24, and the fourth cylinder 23 is rotatably mounted on a side wall of the second expanding and mounting disk 28. An output end of the second cylinder 21 is connected to the first expanding and rotating disk 26, and an output end of the fourth cylinder 23 is connected to the second expanding and rotating disk 30. The first cylinder 20 and the third cylinder 22 are both rotatably mounted on a side edge of the expanding and twisting assembly. A support platform is mounted on a side edge of the lower support base 19. The first cylinder 20 and the third cylinder 22 are both rotatably mounted on the support platform. The first cylinder 20 and the third cylinder 22 are respectively configured to drive the first expanding and mounting disk 24 and the second expanding and mounting disk 28 to rotate. An output end of the first cylinder 20 is connected to the first expanding and mounting disk 24, and an output end of the third cylinder 22 is connected to the second expanding and mounting disk 28. The output end of the second cylinder 21 may drive the first expanding and rotating disk 26 to rotate, and the output end of the fourth cylinder 23 may drive the second expanding and rotating disk 30 to rotate. The output end of the first cylinder 20 may drive the second cylinder 21, the first expanding and rotating disk 26, and the first expanding and mounting disk 24 to rotate, and the output end of the third cylinder 22 may drive the fourth cylinder 23, the second expanding and rotating disk 30, and the second expanding and mounting disk 28 to rotate.

In this embodiment, as shown in FIG. 4, FIG. 5, FIG. 7, and FIG. 8, swing blocks 33 are respectively firmly mounted on the first expanding and rotating disk 26 and the second expanding and rotating disk 30, and the output end of the second cylinder 21 and the output end of the fourth cylinder 23 are respectively rotatably connected to the swing block 33 on the first expanding and rotating disk 26 and the swing block 33 on the second expanding and rotating disk 30. Mounting blocks 34 are respectively firmly mounted on the side wall of the first expanding and mounting disk 24 and the side wall of the second expanding and mounting disk 28. An output end of the first cylinder 20 and an output end of the third cylinder 22 are respectively rotatably connected to the mounting block 34 on the first expanding and mounting disk 24 and the mounting block 34 on the second expanding and mounting disk 28. The output end of the second cylinder 21 pushes a corresponding swing block 33 to drive the first expanding and rotating disk 26 to rotate. In addition, the second cylinder 21 rotates around a center line that is rotatably connected to the first expanding and rotating disk 26, the output end of the fourth cylinder 23 drives a corresponding swing block 33 to drive the second expanding and rotating disk 30 to rotate, and the fourth cylinder 23 rotates around a center line that is rotatably connected to the second expanding and rotating disk 30. The output end of the first cylinder 20 pushes a corresponding mounting block 34 to drive the second cylinder 21, the first expanding and rotating disk 26, and the first expanding and mounting disk 24 to rotate, the output end of the third cylinder 22 pushes a corresponding mounting block 34 to drive the fourth cylinder 23, the second expanding and rotating disk 30, and the second expanding and mounting disk 28 to rotate. Similarly, the first cylinder 20 and the third cylinder 22 rotate around a center line that is rotatably connected to the support platform.

The second cylinder 21 and the fourth cylinder 23 respectively push the first expanding and rotating disk 26 and the second expanding and rotating disk 30 to rotate, and the first cam follower 27 and the second cam follower 31 move in corresponding arc-shaped grooves to respectively drive the corresponding first expanding head 25 and second expanding head 29 to move in the straight grooves. The stator is moved to the expanding and twisting assembly by using the movement protection mechanism, so that outermost two layers of copper wires on the stator are inserted into the corresponding first expanding head 25 and second expanding head 29. The second cylinder 21 and the fourth cylinder 23 operate simultaneously to drive the first expanding and rotating disk 26 and the second expanding and rotating disk 30 to rotate. The first cam follower 27 and the second cam follower 31 slide along the arc-shaped grooves in the first expanding and rotating disk 26 and the second expanding and rotating disk 30 respectively. The first cam follower 27 and the second cam follower 31 respectively drive the corresponding first expanding head 25 and second expanding head 29 to move along the straight grooves, and pull the outermost two layers of copper wires of the stator outward in a radial direction of the stator, to complete expansion and separation of the outermost two layers of copper wires. Then, the first cylinder 20 and the third cylinder 22 simultaneously push the corresponding first expanding and mounting disk 24 and the second expanding and mounting disk 28 to rotate toward each other, to complete twisting and misaligning of the outermost two layers of copper wires. In the two procedures, expansion and separation, and twisting of the stator are completed respectively. Next, the movement protection mechanism drives the stator to move upward, so that components in the expanding and twisting assembly return to original positions by using the first cylinder 20, the second cylinder 21, the third cylinder 22, and the fourth cylinder 23. After the components return to the original positions, the movement protection mechanism drives the stator downward to insert next outermost two layers of copper wires into the first expanding head 25 and the second expanding head 29. The expanding and separation, and twisting of the stator are completed by repeating the foregoing steps, and expanding and separation, and twisting of all copper wires on the stator are repeated multiple times. Then, the movement protection mechanism moves the stator upward, the upper gear protection tooling 12 and the lower gear protection tooling 13 are separated, and a processed stator is taken out to replace an unprocessed stator for processing again.

In this embodiment, as shown in FIG. 4 and FIG. 5, an alignment block 35 is firmly mounted on the disk base 32. The alignment block 35 is mounted at an upper center position of the disk base 32. Convex teeth 36 are fastened to the alignment block 35. The convex teeth 36 on the alignment block 35 help alignment and positioning of the stator when the stator moves downward with the lower gear protection tooling 13, to prevent the copper wire on the stator from being placed tiltedly when the copper wire is moved downward.

FIG. 1 shows an apparatus for processing and producing a flat wire motor stator, including a base 1, a power distribution cabinet 2, and the expanding and twisting mechanism. The power distribution cabinet 2 is mounted on the base 1, the support platform is firmly mounted on the base 1, a material feeding mechanism is mounted on the base 1, the frame body 3 is mounted on the base 1, and a material transfer mechanism is mounted on the frame body 3. Through cooperation of the material feeding mechanism and the material transfer mechanism, a structure for rapidly loading and unloading of the stator is formed. Multiple expanding and twisting mechanisms are mounted on the base 1.

In this embodiment, as shown in FIG. 1, the material feeding mechanism includes a wire body 4. The wire body 4 is firmly mounted on the base 1. Multiple evenly distributed stator bases 5 are firmly mounted on the wire body 4. Multiple lifting cylinders 6 located directly below the corresponding stator bases 5 are firmly mounted on the wire body 4. Stators are placed on the stator bases 5. When the material transfer mechanism takes out the stator, the lifting cylinder 6 operates. An output end of the lifting cylinder 6 pushes the stator on the stator base 5 directly above to move, and cooperates with the material transfer mechanism to take out the stator. In addition, when the material transfer mechanism is ready to place a processed stator on the stator base 5, the output end of the lifting cylinder 6 moves to a proper height to catch the processed stator, and then the output end of the lifting cylinder 6 moves downward to place the processed stator on the stator base 5 stably.

In this embodiment, as shown in FIG. 1 to FIG. 3, the material transfer mechanism includes a third power source 7, a servo motor 8, a clamping jaw cylinder 9, a first linear module 10, and a second linear module 11. The first linear module 10 is mounted on the frame body 3, and two ends of the second linear module 11 are respectively mounted on the frame body 3 and the first linear module 10. One end of the second linear module 11 is fastened to an output end of the first linear module 10, and the other end of the second linear module 11 is slidably connected to the frame body 3. The third power source 7 is mounted on the second linear module 11. The third power source 7 is firmly mounted on an output end of the second linear module 11. The servo motor 8 is mounted on the third power source 7. The servo motor 8 is mounted on an output end of the third power source 7. The third power source 7 may be a pneumatic cylinder for adjusting a position of the servo motor 8 in a vertical position. Two clamping jaw cylinders 9 are firmly mounted on an output end of the servo motor 8. The two clamping jaw cylinders 9 are mounted symmetrically. The first linear module 10 is configured to adjust positions of the second linear module 11, the third power source 7, the servo motor 8, and the clamping jaw cylinders 9 in a front-rear direction. The second linear module 11 is configured to adjust positions of the third power source 7, the motor, and the clamping jaw cylinders 9 in a left-right direction. When the stator needs to be taken and placed by using the material transfer mechanism, the clamping jaw cylinder 9 is moved by using the second linear module 11 to a same vertical plane on the stator base 5. Then the third power source 7 drives the clamping jaw cylinder 9 to move downward, and the lifting cylinder 6 under the corresponding stator base 5 pushes the stator upward to enable the stator to be flush with the clamping jaw cylinder 9 horizontally. The first linear module 10 drives the second linear module 11, the third power source 7, and the servo motor 8 to drive the clamping jaw cylinder 9 to be close to the stator base 5. The stator is clamped by using the clamping jaw cylinder 9, and then the third power source 7 drives the clamping jaw cylinder 9 and the stator to rise. Next, the servo motor 8 drives the clamping jaw cylinder 9 to rotate. The first linear module 10, the second linear module 11, the third power source 7, and the clamping jaw cylinder 9 are controlled, so that the stator is placed on the expanding and twisting mechanism. Alternatively, one expanding and twisting mechanism that has completed the processing procedure may be selected, and a processed stator on the expanding and twisting mechanism is taken down and placed on a corresponding stator base 5 by using the first linear module 10, the second linear module 11, the servo motor 8, the third power source 7, and the clamping jaw cylinder 9. The material transfer mechanism can simultaneously meet requirements for receiving and placing the stators on multiple expanding and twisting mechanisms. One of the two clamping jaw cylinders 9 can clamp the processed stator, and the other can clamp an unprocessed stator. When it is necessary to take the processed stator away, the clamping jaw cylinder 9 takes out the processed stator and rotates the processed stator by 180° by using the servo motor 8, and then the other clamping jaw cylinder clamps and places the unprocessed stator, thereby completing replacement of the processed stator with the unprocessed stator on the expanding and twisting mechanism. This process is repeated to ensure continuous processing of the stators.

When the present invention is used, the material transfer mechanism places the stator on the stator base 5 on the lower gear protection tooling 13, the first power source 14 and the second power source 15 drive the upper gear protection tooling 12 and the lower gear protection tooling 13 to protect the stators and move the stators downward, so that the stators are calibrated by the alignment block 35 and placed on the separating and twisting assembly. Therefore, the outermost two layers of copper wires on the stators are respectively inserted into the first expanding head 25 and the second expanding head 29. The second cylinder 21 and the fourth cylinder 23 operate simultaneously to complete expansion and separation of the outermost two layers of copper wires on the stators. The first cylinder 20 and the third cylinder 22 operate simultaneously to complete twisting of the outermost two layers of copper wires. Then the stator is moved upward by using the movement protection mechanism, components in the expanding and twisting assembly are reset, and the expansion and separation, and twisting of next outermost two layers of copper wires on the stator are implemented. The step is repeated in sequence to complete separation and twisting of copper wires on the stator. Then the lower gear protection tooling 13 and the upper gear protection tooling 12 are moved upward, so that the stator is moved upward, and the upper gear protection tooling 12 is moved upward alone, so that the stator is exposed. A processed stator is transferred by using the material transfer mechanism, and then an unprocessed stator is placed on the lower gear protection tooling 13 for processing. The apparatus is kept operating.

Although the present invention is described in detail with reference to the foregoing embodiments, a person skilled in the art may still modify the technical solutions described in the foregoing embodiments, or perform equivalent replacement on some of the technical features. Any modification, equivalent replacement, improvement, or the like performed within the spirit and principles of the present invention as claimed shall fall within the protection scope of the present invention.

## Claims

1. An expanding and twisting mechanism for processing and producing a flat wire motor stator, **characterized by** comprising:
a movement protection mechanism, configured to protect and transport a stator during production;
an expanding and twisting assembly, configured to expand, separate, and twist a flat wire of a stator transported by the movement protection mechanism;
a driving mechanism, configured to provide power for movement of a component in the expanding and twisting assembly; and
a lower support base (19), configured to mount the expanding and twisting assembly.

2. The expanding and twisting mechanism for processing and producing a flat wire motor stator according to claim 1, **characterized in that** the movement protection mechanism comprises an upper gear protection tooling (12), a lower gear protection tooling (13), a first power source (14), a second power source (15), and a ninety-degree angle converter (16), the second power source (15) is firmly mounted on an upper surface of a frame body (3), an output end of the second power source (15) extends to a lower surface of the frame body (3) and is firmly connected to the upper gear protection tooling (12), the first power source (14) is firmly mounted on the upper surface of the frame body (3), the ninety-degree angle converter (16) is firmly mounted on the upper surface of the frame body (3), an output end of the first power source (14) is connected to the ninety-degree angle converter (16), a screw rod (17) is firmly mounted on an output end of the ninety-degree angle converter (16), the lower gear protection tooling (13) meshes with the screw rod (17), the lower gear protection tooling (13) is slidably mounted on the frame body (3) through a sliding rod (18), and for the lower gear protection tooling (13), through cooperation of the ninety-degree angle converter (16), the screw rod (17), and the sliding rod (18), a structure for adjusting a height of the lower gear protection tooling (13) is formed.

3. The expanding and twisting mechanism for processing and producing a flat wire motor stator according to claim 1, **characterized in that** the expanding and twisting assembly comprises a first expanding and mounting disk (24), a first expanding head (25), a first expanding and rotating disk (26), a first cam follower (27), a second expanding and mounting disk (28), a second expanding head (29), a second expanding and rotating disk (30), and a second cam follower (31), the second expanding and mounting disk (28) is movably mounted on the lower support base (19) through a disk base (32), the disk base (32) is firmly mounted on the lower support base (19), the second expanding and mounting disk (28) is rotatably mounted on the disk base (32), and the second expanding and rotating disk (30) is rotatably mounted in the second expanding and mounting disk (28), the first expanding and mounting disk (24) is rotatably mounted on the second expanding and mounting disk (28), the first expanding and rotating disk (26) is rotatably mounted within the first expanding and mounting disk (24), multiple first expanding heads (25) are slidably connected between the first expanding and mounting disk (24) and the first expanding and rotating disk (26), multiple second expanding heads (29) are slidably connected between the second expanding and mounting disk (28) and the second expanding and rotating disk (30), the first cam follower (27) is rotatably connected to the first expanding head (25), and the second cam follower (31) is rotatably connected to the second expanding head (29).

4. The expanding and twisting mechanism for processing and producing a flat wire motor stator according to claim 3, **characterized in that** the driving mechanism comprises a first cylinder (20), a second cylinder (21), a third cylinder (22), and a fourth cylinder (23), the second cylinder (21) is rotatably mounted on a side wall of the first expanding and mounting disk (24), and the fourth cylinder (23) is rotatably mounted on a side wall of the second expanding and mounting disk (28), an output end of the second cylinder (21) is connected to the first expanding and rotating disk (26), an output end of the fourth cylinder (23) is connected to the second expanding and rotating disk (30), the first cylinder (20) and the third cylinder (22) are both rotatably mounted on a side edge of the expanding and twisting assembly, and the first cylinder (20) and the third cylinder (22) are respectively configured to drive the first expanding and mounting disk (24) and the second expanding and mounting disk (28) to rotate.

5. The expanding and twisting mechanism for processing and producing a flat wire motor stator according to claim 4, **characterized in that** swing blocks (33) are respectively firmly mounted on the first expanding and rotating disk (26) and the second expanding and rotating disk (30), the output end of the second cylinder (21) and the output end of the fourth cylinder (23) are respectively rotatably connected to the swing block (33) on the first expanding and rotating disk (26) and the swing block (33) on the second expanding and rotating disk (30), mounting blocks (34) are respectively firmly mounted on the side wall of the first expanding and mounting disk (24) and the side wall of the second expanding and mounting disk (28), and an output end of the first cylinder (20) and an output end of the third cylinder (22) are respectively rotatably connected to the mounting block (34) on the first expanding and mounting disk (24) and the mounting block (34) on the second expanding and mounting disk (28).

6. The expanding and twisting mechanism for processing and producing a flat wire motor stator according to claim 3, **characterized in that** an alignment block (35) is firmly mounted on the disk base (32), the alignment block (35) is mounted at an upper center position of the disk base (32), and convex teeth (36) are fastened to the alignment block (35).

7. An apparatus for processing and producing a flat wire motor stator, **characterized by** comprising a base (1), a power distribution cabinet (2), and the expanding and twisting mechanism according to any one of claims 1 to 6, wherein the power distribution cabinet (2) is mounted on the base (1), a material feeding mechanism is mounted on the base (1), a frame body (3) is mounted on the base (1), a material transfer mechanism is mounted on the frame body (3), through cooperation of the material feeding mechanism and the material transfer mechanism, a structure for rapid loading and unloading of the stator is formed, and multiple expanding and twisting mechanisms are mounted on the base (1).

8. The apparatus for processing and producing a flat wire motor stator according to claim 7, **characterized in that** the material feeding mechanism comprises a wire body (4), the wire body (4) is firmly mounted on the base (1), multiple evenly distributed stator bases (5) are firmly mounted on the wire body (4), and multiple lifting cylinders (6) located directly below the corresponding stator bases (5) are firmly mounted on the wire body (4).

9. The apparatus for processing and producing a flat wire motor stator according to claim 7, **characterized in that** the material transfer mechanism comprises a third power source (7), a servo motor (8), a clamping jaw cylinder (9), a first linear module (10), and a second linear module (11), the first linear module (10) is mounted on the frame body (3), two ends of the second linear module (11) are respectively mounted on the frame body (3) and the first linear module (10), the third power source (7) is mounted on the second linear module (11), the servo motor (8) is mounted on the third power source (7), and two clamping jaw cylinders (9) are firmly mounted on an output end of the servo motor (8).
